Europäisches Patentamt

European Patent Office

Office européen des brevets

(11) Publication number : **0 445 095 A1**

# EUROPEAN PATENT APPLICATION

(21) Application number : **91850044.8**

(22) Date of filing : **25.02.91**

(51) Int. Cl.⁵ : **B65G 65/32, B65D 88/28**

(30) Priority : **02.03.90 SE 9000757**

(43) Date of publication of application :
**04.09.91 Bulletin 91/36**

(84) Designated Contracting States :
**AT BE CH DE DK ES FR GB IT LI LU NL SE**

(71) Applicant : **UNI PATENT AB**
**Box 22**
**S-190 63 Orsundsbro (SE)**

(72) Inventor : **Reinholdsson, Bo**
**Skolvägen 51B**
**S-190 63 Örsundsbro (SE)**

(74) Representative : **Bjellman, Lennart Olov Henrik et al**
**DR. LUDWIG BRANN PATENTBYRA AB**
**Drottninggatan 7 Box 1344**
**S-751 43 Uppsala (SE)**

(54) Equipment for preventing separation in bulk materials.

(57)    The present invention concerns equipment which prevents separation in bulk material during transfer or transportation. The equipment comprises at least one tube (52) which is positioned in an intermediate storage hopper and which is open throughout its length and throught which bulk material may flow. The tube (52), which preferably is funnel-shaped, is raisably and lowerably arranged in the intermediate storage hopper. Under said hopper there is preferably a spreader, which comprises two beams, which are essentially parallel and of triangular cross section, an apex of each of the beams facing the discharge opening of the intermediate storage hopper.

Fig. 5

EP 0 445 095 A1

# EQUIPMENT FOR PREVENTING SEPARATION IN BULK MATERIALS

The present invention basically relates to equipment for preventing separation in bulk materials, which contains material of different particle sizes.

The invention has come into being for solving the problem with the separation occurring in ballast material included in the asphalt composition ordinarily used for metall roads, streets and the like, and will therefore be described in conjunction therewith. It is, however, not limited to this particular application but can be utilized in many different fields, e.g. with concrete, manuring agents, flour and flour mixtures and the like, in which particles or ingredients are included that have varying sizes.

Very often, the metalling on streets and roads has an uneven quality due to the ballast material in the asphalt composition having separated during the different steps in transport, when the composition is transferred first from the asphalt works to an intermediate storage sealer and then from this to the transport vehicle and from there to the layer and at last out on the roadway. In each step, each material size in the ballast material strives to collect at the sloping surfaces automatically formed when the asphalt composition is tipped.

The uneven structure of the laid asphalt composition results in the risk of traffic accidents increasing since certain areas get poor water runoff, the risk of water planing then increasing, and wear will be uneven so that the roadway can be wavy and repair patching must take place.

For several reasons, it would therefore be a saving if the quality on the laid asphalt composition could be made better than what the case is today. The roadway could be made more safe for traffic with less risk of different types of skidding accidents as well as other types of accident, and maintenance could be reduced by avoiding patching and repairing individual places. Instead, larger road sections could be renovated at greater intervals than what is the case today, which is something which could save costs in the order of millions every year in roadway maintenance.

The present invention has the object of obviating the above-mentioned problems by simple means and equipment and without interfering in the asphalt composition itself or its production. This object is achieved by equipment of the kind disclosed in the accompanying claims, from which also will be seen the characterizing features of the invention.

The invention will now be described in more detail in the following and in connection with the accompanying drawings, where

FIG. 1 is a schematic depiction of conventional conveyance of the asphalt composition between an asphalt mixer and a transport vehicle,

FIG. 2 is a schematic broken-away elevation view of a intermediate storage silo equipped with a spreader according to the invention,

FIG. 3 is a section taken along the line H-H in Fig. 2,

FIG. 4 is a schematic top view of the intermediate storage silo shown in Fig. 2 and equipped with a hoistable device,

FIG. 5 is a section taken along the line E-E in Fig. 4, and

FIG. 6 the views I-IV of which show schematically in section different operative steps of the intermediate storage silo represented in Figs. 2-5.

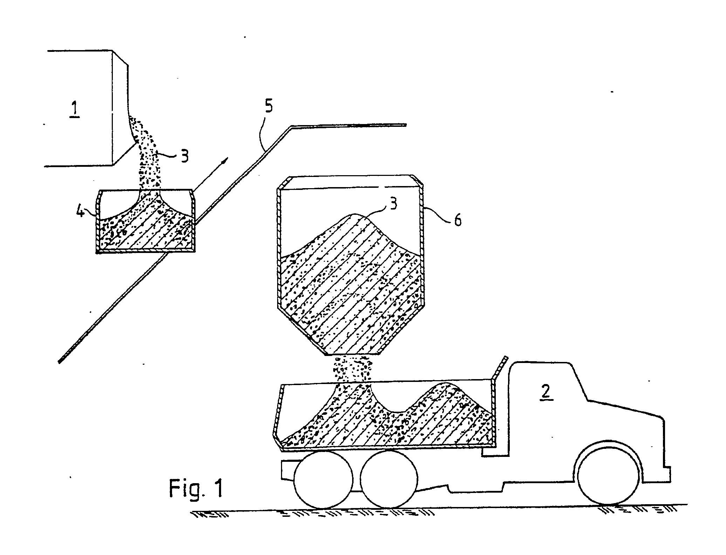

According to Fig. 1, illustrating the conventional procedure in moving the asphalt composition from an asphalt mixer to a truck 2, the asphalt composition 3 is first tipped from the mixer 1 to the skip 4 running on a sloping track 5. The skip lifts the composition 3 for tipping it into a hot holding hopper 6 for intermediate storage of the composition 3 and from which the material is tapped onto transport vehicles such as trucks or lorries 2. In each tipping or tapping operation, the asphalt composition 3 behaves as gravel, i.e. it forms a pyramid-like pile where the larger stones roll out towards the sides of the pile and the material will be finer and finer the further inwards and upwards it is in the pile. It two piles are tipped onto the deck of a truck, as is often the case, there will be an extra large collection of larger stones where the two piles come against each other. Later on, when the deck or flat bed or platform is tipped, the asphalt composition in the separated state is transferred to the asphalt spreader, which in turn spreads the separated asphalt composition in the undesired way mentioned in the introduction. It should also be noticed that the greater the height at which tapping or tappings takes/take place, the greater the separation will be.

If the whole procedure according to Fig. 1 is utilized, at least the hot holding hopper 6 and preferably also the skip 4 each has an embodiment with devices, which are required to keep the asphalt composition in them hot during the intermediate storage time. The hopper 6, which is suitably, as shown, a round up-ended container, comprises an arrangement, which will be described below and which prevents separation of the masses in said container.

The hopper is conically shaped 15 at its lower tapping end, this cone being preferably somewhat more acute than the angle of repose of the asphalt composition.

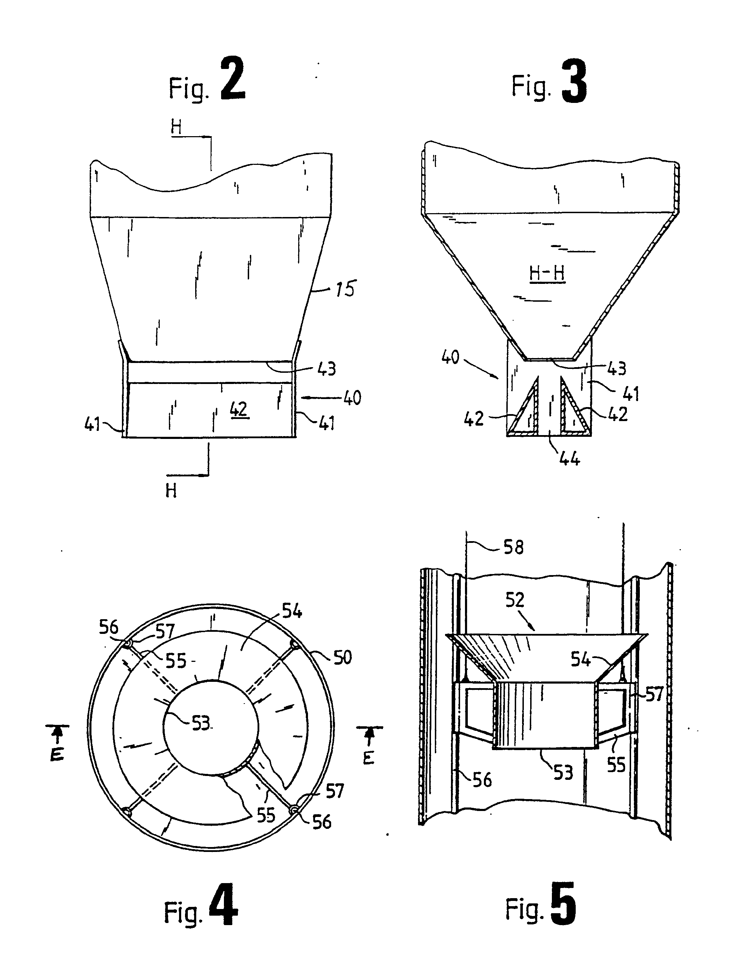

Irrespective of what type of intermediate storage and/or hot holding hopper is used when a vehicle is to be loaded, a spreader 40 according to Figs. 2 and 3 at the discharge opening 43 gives a uniform discharge of the bulk material with reduced separation. The spreader 40 comprises two end members 41, located one at either end thereof, and two beams 42 which are triangular in cross-section and have their apexes facing upwards towards the hopper. In the illustrated embodiment, the triangles are right-angular with their hypotenuses facing towards each other and between them defining a gap 44 through which a part of the bulk material flowing down from the hopper can pass. However, the gap 44 is too narrow for all the material to come through there, and a part of the material will pass on the outside of the beams 42, i.e. along the hypotenuse. This is not only because of what has been said above but also because of the upwardly directed apexes of the beams 42 lying within the edges of the discharge opening 43.

In the use of this spreader 40, the bulk material will thus be divided into three streams, which then blend together to form a pile or for being spread out over a divider 20 of the kind already mentioned. There then occurs renewed blending resulting in that possible separation in the streams is avoided.

In Figs. 4-6, there is illustrated a further embodiment of the separation inhibiting device for bulk goods, this device being intended for placing in an intermediate and/or hot holding hopper. In the embodiment illustrated, the hopper 50 itself comprises a cylindrical drum, at its lower end provided with a closable discharge opening 51, all of which is conventional. The discharge opening 51 may be provided with a spreader 40 of the kind to be seen from Figs. 2 and 3.

In the illustrated embodiment, a cylindrical funnel 52 is hoistably arranged inside the drum 50. The funnel comprises a lower pipe portion 53 which is cylindrical and has a diameter less than half the diameter of the drum 50, and an upper conical portion 54 with an outwardly increasing diameter, its upper diameter being approximately 3/4 of the diameter of the drum 50. From the tube portion 53, there are four blades or baffles 55 projecting radially outwards at 90° spacing. At the outer ends of these, there are guides 56 in the form of vertical rails attached to the inside of the drum 50 and these co-operate with guide means 57 at the outer ends of the blades 55 so that the funnel 52 can be moved upwards and downwards in the drum 50 without altering position except in height.

The movement upwards and downwards of the funnel 52 in the drum takes place with the aid of cables 58 in the illustrated embodiment, upwardly in the drum 50 these cables being taken over unillustrated sheaves to an unillustrated hoisting machinery. Lowering of the funnel 52 suitably takes place with the aid of gravity. The position in height of the funnel is regulated with the aid of a sensing device to suit the amount of bulk material in the silos.

Hydraulic or pneumatic motor power can be used instead of the cables 58 which are then replaced with piston and cylinder arrangements.

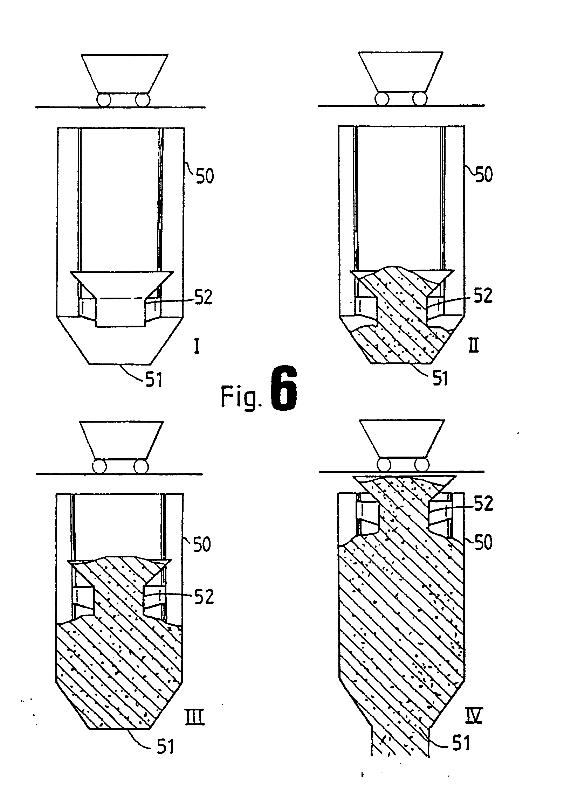

According to Fig. 6 I, the funnel 52 is at its lowest position in the drum 50. This is the position for initially filling the drum from the skip indicated above it. Material from the skip is collected by the funnel 52 and the latter is raised in synchronization with the supply of material. This means that the funnel is filled all the time, which is apparent from Fig. 6 II and 6 III and it meets the material falling down from the skip so that the material never forms a pile and thus no coarser ballast material rolls down at the sides to lie in a ring. The drum has the same distribution of the bulk material at this end until the state has occurred when it is filled, as is apparent from Fig. 6 IV. When tapping from the discharge opening 51, the funnel 52 accompanies the material downwards in the drum 50 och prevents separation in it. If the discharge opening 51 is then provided with a spreader 40 according to Figs. 2-3, the material is spread uniformly over the deck or the like, without risk of separation.

Although several apparently different embodiments of the invention has been shown and described, one skilled in the art will understand that there is the same basic concept behind all of them, which is that the invention is directed towards preventing the bulk materials from forming relatively large sharply tipped piles where the ballast readily rolls out to lie in a ring at the bottom of the pile or collect in some other way separate from the rest of the bulk material.

It will thus be understood that the present invention has solved in a simple, cheap and effective manner the well-known problem with separation of ballast material and other coarser material from the rest of the material. In other words, the object stated in the introduction has been achieved. Many further variations of the invention will be obvious to one skilled in the art, against the background of this description. Such variations are, however, within the scope of the invention as defined in the following claims.

## Claims

1.  Equipment for preventing separation in bulk material in connection with an intermediate storage hopper (6, 50), which is in the form of a vertically positioned drum, which is open at the top for filling of the bulk material and which has at the bottom a closable opening for discharging the bulk material contained in the intermediate storage hopper (6, 50), at least one tubular means (52) being positioned in the intermediate storage hopper (6, 50) in such a position that its ends are directed towards the upper and lower opening respectively of the intermediate storage hopper (6, 50) and is spaced to the inner wall of the hopper (6, 50), characterized in that said tubular means (52) is arranged to be raised and lowered within the intermediate storage hopper (6, 50).

2. Equipment according to claim 1, characterized in that said tubular means (52) is funnel-shaped having its wider opening facing upwards.

3. Equipment according to claim 1 or 2, characterized in that said tubular means (52) is raisable and lowerable with the aid of hydraulic or pneumatic means.

4. Equipment according to any of the preceding claims, characterized in that said intermediate storage hopper (6, 50) is provided, at its closable bottom opening, with a spreader (40) for the bulk material being discharged, and which is positioned under the level of the opening (43).

5. Equipment according to claim 4, characterized in that said spreader comprises two beams (42), which are positioned essentially parallel and having a triangular cross section, an apex of each of the beams (42) facing the discharge opening (43) of the intermediate storage hopper (6, 50).

Fig. 1

Fig. **2**

Fig. **3**

Fig. **4**

Fig. **5**

Fig. **6**

**European Patent Office**

## EUROPEAN SEARCH REPORT

Application Number

EP 91 85 0044

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-U-8814228 (LADWEIN) <br> * page 4; figure * | 1, 2 | B65G65/32 <br> B65D88/28 |
| Y | | 4, 5 | |
| A | | 3 | |
| | --- | | |
| Y | DE-A-1456694 (MIAG MUHLENBAU UND INDUSTRIE) <br> * page 3, lines 23 - 30; figures 1, 3 * | 4, 5 | |
| | --- | | |
| A | DF-A-3604287 (UHDE GMBH) <br> * abstract; figure * <br> * column 15, last paragraph * | 1-3 | |
| | --- | | |
| X | EP-A-200000 (GUSTAV SCHADE MASCHINENFABRIK) <br> * column 8, lines 30 - 46; figure 7 * | 1, 2 | |
| A | | 3 | |
| | ----- | | |

**TECHNICAL FIELDS SEARCHED (Int. Cl.5)**

B65G
B65D

The present search report has been drawn up for all claims

| Place of search | Date of completion of the search | Examiner |
|---|---|---|
| THE HAGUE | 07 JUNE 1991 | NEVILLE D.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

8